# EUROPÄISCHE PATENTSCHRIFT

(11) **EP 0 378 152 B1**
(45) Veröffentlichungstag und Bekanntmachung des Hinweises auf die Patenterteilung: **30.03.1994**
(21) Anmeldenummer: 90100313.7
(22) Anmeldetag: 08.01.1990
(51) Int. Cl.: F25B 41/06, F25B 49/02

(54) **Verfahren zur Leistungsoptimierung von Kältemittelverdampfern**
Performance-optimising method for refrigerant evaporators
Procédé pour optimaliser la performance d'évaporateurs de réfrigérant

(30) Priorität: 11.01.1989 DE 3900643
(43) Veröffentlichungstag der Anmeldung: 18.07.1990
(73) Patentinhaber: KÜBA KÄLTETECHNIK GmbH, 82065 Baierbrunn (DE)
(72) Erfinder: Iyrek, Paul, 8196 Eurasburg (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 078 928
- EP-A- 0 123 643
- EP-A- 0 133 512
- DE-A- 3 337 095
- DE-A- 3 739 980
- GB-A- 2 046 481
- US-A- 2 534 455
- US-A- 4 067 203
- US-A- 4 244 182
- US-A- 4 506 518

## Beschreibung

Die Erfindung betrifft ein Verfahren zur Leistungsoptimierung von mit Kältemittel betriebenen, über ein Expansionsventil gespeisten Kühlern, insbesondere Ventilator-Luftkühlern.

Kältemittelverdampfer, insbesondere Ventilator-Luftkühler werden in der Praxis in großem Umfange eingesetzt und müssen sicherstellen, daß die zu kühlenden Güter, insbesondere auch besonders empfindliche Güter, die nicht austrocknen dürfen, auf einer möglichst genau vorgebbaren Temperatur gehalten werden.

Die Erfüllung dieser Forderung stößt insbesondere dann auf erhebliche Schwierigkeiten, wenn unterschiedliche Leistungsanforderungen auftreten, die Zulufttemperatur, z.B. beim Öffnen von Türen, größeren Schwankungen ausgesetzt ist und im Luftkühler selbst Reif- oder Eisbildung unterschiedlichen Ausmaßes entsteht.

Aus der EP 0 078 928 A2 ist ein Verfahren zur Regelung der umlaufenden Kältemittelmenge in einem Kältemittelkreislauf von Kühlanlagen mit Hilfe eines Ventils bekannt, bei dem die Temperatur des Kältemittels im Endbereich der Verdampfungszone und die Temperatur des Kältemittels im Bereich der Überhitzungszone gemessen und die dabei ermittelte Temperaturdifferenz zwischen dem noch flüssigen und dem gasförmigen Kältemittel mit einem Sollwert verglichen und bei Abweichung vom Sollwert das Ventil betätigt wird. Erreicht wird dadurch, daß ein Ventil ohne Umrüstung für jedes Kältemittel und auch für Kältemittelmischungen verwendet werden kann. Die Regelung der Kältemittelmenge für Kühlanlagen erfolgt dabei unbeeinflußt von der Umgebungstemperatur.

Aus der DE-A-33 37 095 ist eine Einrichtung zur Erfassung der Stellungen von in Leitungszügen von Kältemittelkreisläufen angeordneten Sperr- bzw. Regelorganen bekannt, wobei das in Kälteanlagen häufig verwendete thermostatische Expansionsventil durch ein Regelorgan mit Stellantrieb ersetzt sein kann. Die optimale Stellung des Regelorgans mit Stellantrieb kann mittels eines Prozessors ermittelt werden, wobei dieser Prozessor über entsprechende Fühler die Temperatur des Kältemittels, die Umgebungstemperatur, die Verdampfungstemperatur am Wärmetauscher und die Überhitzungstemperatur berücksichtigt.

Aufgabe der Erfindung ist es, ein Verfahren zur Leistungsoptimierung von mit Kältemittel betriebenen, über ein Expansionsventil gespeisten Kühlern zu schaffen, das mit geringem Aufwand realisierbar ist, stets die bestmögliche Leistung des Luftkühlers gewährleistet und auch zu einer gleichmäßigeren Vereisung und damit zu einer Erleichterung und Verbesserung der Abtauregelung beiträgt.

Gelöst wird diese Aufgabe nach der Erfindung im wesentlichen dadurch, daß neben der Lufteintrittstemperatur bzw. Zulufttemperatur sowohl die Verdampfungstemperatur als auch die Temperatur am Luftkühlerausgang kontinuierlich oder taktweise gemessen und der in Grad Kelvin gemessene Differenzwert zwischen Zulufttemperatur und Verdampfungstemperatur bestimmt wird und daß dieser Differenzwert zur Bildung eines Temperatur-Rechenwerts mit einem Faktor zwischen 0,6 und 0,7, insbesondere dem Faktor 0,625 multipliziert und das luftkühlereingangsseitige Expansionsventil kontinuierlich oder taktweise in der Weise angesteuert wird, daß die aus der Verdampferausgangstemperatur und der Verdampfertemperatur gebildete Überhitzung zumindest im wesentlichen gleich dem Temperatur-Rechenwert ist.

Die gemäß der Erfindung vorgesehene, praktisch ständige Temperatur-Rechenwertbestimmung und die Ansteuerung des Expansionsventils in der Weise, daß die aus der Verdampferausgangstemperatur und der Verdampfertemperatur gebildete Überhitzung im wesentlichen gleich dem Temperatur-Rechenwert ist, stellt sicher, daß im letzten Teilabschnitt des Verdampfers das Kältemittel sich stets im überhitzten Zustand befindet und ausgangsseitig nur noch Dampf austritt, und zwar praktisch unabhängig von den jeweiligen Leistungsanforderungen. Damit wird im jeweiligen Kühlraum auch eine sehr genaue Temperaturregelung ermöglicht, die sich besonders bei empfindlichen Gütern positiv auswirkt.

Eine weitere Folge der erfindungsgemäßen Leistungsoptimierung des Luftkühlers ist, daß die Wartungsanforderungen geringer werden und aufgrund der ständige Regelung eine gleichmäßigere Vereisung stattfindet, was es wiederum gestattet, die Durchführung der Abtauvorgänge zu optimieren.

Obwohl es prinzipiell auch möglich wäre, die Verdampfertemperatur ausgangsseitig über den Druck zu erfassen, wird gemäß der Erfindung diese Temperaturerfassung bevorzugt über einen am Verdampferrohr unmittelbar befestigten Temperaturfühler vorgenommen, da dadurch bei der Meßwertgewinnung eine völlige Unabhängigkeit von dem jeweils verwendeten Kältemittel erhalten wird. Der Ort der Anbringung des Temperaturfühlers ist dabei unkritisch, aber vorzugsweise wird der entsprechende Fühler etwa auf halber Verdampferrohrlänge montiert. Eine Reif- oder Eisbildung am Verdampferrohr wirkt sich dabei nicht meßwertverfälschend aus.

Obwohl prinzipiell unterschiedliche steuerbare Expansionsventile Verwendung finden können, wird insbesondere ein elektrisch oder elektronisch stellbares, vorzugsweise digital ansteuerbares und mit einem Nadelventil ausgestattetes Ventil verwendet. Da die gesamte Meßwertverarbeitung und Regelsignalbildung in einer Recheneinheit erfolgt und die jeweils gebildeten Ansteuersignale von einem derartigen Ventil besonders günstig und unter Vermeidung von Regelinstabilitäten verarbeitet werden können.

Besonders vorteilhafte Ausführungsvarianten der Erfindung sind in den Unteransprüchen angegeben.

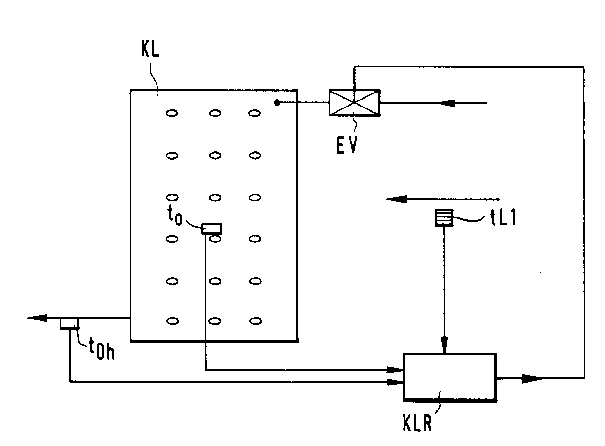

Die Erfindung wird nachfolgend anhand eines Ausführungsbeispiels unter Bezugnahme auf die Zeichnung erläutert; die einzige Figur der Zeichnung zeigt eine schematische Darstellung eines mit einem Kältemittel betriebenen Ventilator-Luftkühlers, der mit einer nach dem erfindungsgemäßen Verfahren arbeitenden Regeleinheit ausgestattet ist.

Die Zeichnung zeigt einen Ventilator-Luftkühler KL, dessen durch ein Lamellenpaket geführte Rohrleitungen über ein Expansionsventil EV mit Kältemittel beaufschlagt sind. Etwa auf halber Rohrlänge einer Verteilung ist im Luftkühler KL ein Temperaturfühler in unmittelbarem Kontakt mit der Rohrleitung angeordnet, und mittels dieses Temperaturfühlers wird die Verdampfungstemperatur t₀ gemessen. Das Meßsignal wird einer Recheneinheit KLR zugeführt.

Am Verdampferausgang wird ebenfalls mittels eines Temperaturfühlers die Temperatur t_{Oh} gemessen, und die Meßwerte werden ebenfalls der Recheneinheit KLR zugeführt.

Die Temperatur tL1 der Zuluft wird mittels eines im Zuluftstrom angeordneten Temperaturfühlers gemessen, und auch diese Meßwerte erhält die Recheneinheit KLR.

Die Kältemittelzuführung erfolgt über ein regelbares Expansionsventil EV, wobei die Stellwerte von der Recheneinheit KLR geliefert werden.

In der Recheneinheit KLR wird in dem dargestellten Beispiel die in Grad Kelvin gemessene Differenz Δ t₁ zwischen der Zulufttemperatur tL1 und der Verdampfungstemperatur t₀ gebildet, und dieser Differenzwert wird mit einem vorgebbaren Faktor zwischen 0,6 und 0,7 multipliziert, so daß ein Temperatur-Rechenwert erhalten wird.
Das Expansionsventil EV wird dann in der Weise gesteuert, daß die aus der Verdampferausgangstemperatur t_{Oh} und der Verdampfertemperatur t₀ gebildete Überhitzung im wesentlichen gleich dem Temperatur-Rechenwert ist.

### Bezeichnungserläuterung

- EV =: elektrisch oder elektronisch stellbares Expansionsventil
- KL =: Luftkühler
- tL1 =: Lufteintrittstemperatur bzw. Zulufttemperatur
- t0 =: Verdampfungstemperatur des Kältemittels
- t0h =: Überhitzungstemperatur am Ende des Luftkühlers gemessen am Ausgangsrohr (Saugleitung)
- KLR =: Recheneinheit zur Bildung der Stellwerte für EV

tL1, t0 und t0h werden mit Temperaturfühlern gemessen

## Patentansprüche

1. Verfahren zur Leistungsoptimierung von mit Kältemittel betriebenen, über ein Expansionsventil gespeisten Kühlern, insbesondere Ventilator-Luftkühlern, bei dem neben der Lufteintrittstemperatur bzw. Zulufttemperatur (tL1) sowohl die Verdampfungstemperatur (t₀) als auch die Temperatur am Luftkühlerausgang (t_{Oh}) kontinuierlich oder taktweise gemessen und der in Grad Kelvin gemessene Differenzwert (Δ t₁) zwischen Zulufttemperatur (tL1) und Verdampfungstemperatur (t₀) bestimmt wird, und bei dem dieser Differenzwert (Δ t₁) zur Bildung eines Temperatur-Rechenwerts mit einem Faktor zwischen 0,6 und 0,7, insbesondere dem Faktor 0,625 multipliziert und das luftkühlereingangsseitige Expansionsventil (EV) kontinuierlich oder taktweise in der Weise angesteuert wird, daß die aus der Verdampferausgangstemperatur (t_{Oh}) und der Verdampfertemperatur (t_{O}) gebildete Überhitzung zumindest im wesentlichen gleich dem Temperatur-Rechenwert ist.

2. Verfahren nach Anspruch 1,
dadurch **gekennzeichnet,**
daß die Verdampfungstemperatur (t_{O}) mittels eines Temperaturfühlers gemessen wird, der am Verdampferrohr, insbesondere im Bereich der halben Verdampferrohrlänge, befestigt ist.

3. Verfahren nach Anspruch 1 oder 2,
dadurch **gekennzeichnet,**
daß die Differenz-, Rechen- und Vergleichswerte insbesondere kontinuierlich gebildet werden und das Expansionsventil (EV) in einem vorgebbaren Zeittakt angesteuert wird.

4. Verfahren nach einem der vorhergehenden Ansprüche,
dadurch **gekennzeichnet,**
daß die Ansteuerung des Expansionsventils (EV) immer dann erfolgt, wenn der Vergleichswert außerhalb eines vorgebbaren Toleranzbereichs liegt.

5. Verfahren nach einem der vorhergehenden Ansprüche,
dadurch **gekennzeichnet,**
daß während der Phase der Inbetriebnahme des Luftkühlers ein sich vom Normalbetrieb unterscheidender Zeittakt zur Ansteuerung des Expansionsventils (EV) verwendet wird.

6. Verfahren nach einem oder mehreren der vorhergehenden Ansprüche,
dadurch **gekennzeichnet,**
daß als Expansionsventil (EV) ein elektrisch oder elektronisch stellbares, insbesondere digital ansteuerbares Expansionsventil mit einer verstellbaren Ventilnadel verwendet wird.

7. Verfahren nach einem oder mehreren der vorhergehenden Ansprüche,
dadurch **gekennzeichnet,**
daß die Meßwertverarbeitung und die Bildung von Ansteuersignalen für das Expansionsventil (EV) in einer mit einem speziell erstelltem Programm ausgestatteten oder ladbaren Recheneinheit erfolgt.

## Claims

1. A method of optimizing the performance of refrigeration devices which are operated with a refrigerant and fed via an expansion valve, in particular of fan air refrigeration devices, wherein, in addition to the air entry temperature or the supply air temperature (tL1), both the vaporization temperature (t₀) and also the temperature at the air refrigerator outlet (t_{Oh}) are measured continuously or cyclically and the difference value (Δt₁) measured in degrees Kelvin between the supply air temperature (tL1) and the vaporization temperature (t₀) is determined; and wherein this difference value (Δt₁) is multiplied by a factor between 0.6 and 0.7, in particular by the factor 0.625 to form a computed temperature value and the expansion valve (EV) at the inlet side of the air refrigerator is then controlled continuously or cyclically in such a way that the overheating formed from the vaporizer outlet temperature (t_{Oh}) and from the vaporization temperature is at least substantially the same as the computed temperature value.

2. Method in accordance with claim 1, characterized in that the vaporization temperature (t₀) is measured by means of a temperature sensor secured to the vaporizer tube, in particular in the region of the half length of the vaporizer tube.

3. Method in accordance with claim 1 or claim 2, characterized in that the difference value, the computed value and the comparative value are in particular continuously formed and the expansion valve (EV) is controlled in a predeterminable time cycle.

4. Method in accordance with one of the preceding claims, characterized in that the control of the expansion valve (EV) is always effected when the comparison value lies outside of a predeterminable tolerance range.

5. Method in accordance with one of the preceding claims, characterized in that, during the phase of commencing use of the air refrigerator, a time cycle is used for control of the expansion valve (EV) which differs from the time cycle in normal operation.

6. Method in accordance with one or more of the preceding claims, characterized in that an electrically or electronically positionable, in particularly digitally controllable expansion valve with an adjustable valve needle is used as the expansion valve (EV).

7. Method in accordance with one or more of the preceding claims, characterized in that the measured value processing and the formation of control signals for the expansion valve (EV) takes place in a computing unit which is equipped with or can be loaded with a specially prepared programme.

## Revendications

1. Procédé pour optimiser la performance de refroidisseurs fonctionnant avec un réfrigérant et alimentés par une valve d'expansion, en particulier refroidisseurs à air ventilés, dans lequel, outre la température d'entrée d'air ou température d'air amené (t_{L1}), on mesure également la température d'évaporation (t_{O}) et la température (t_{Oh}) à la sortie de l'évaporateur de manière continue ou périodiquement et on détermine la valeur différentielle (Δt₁) mesurée en degrés Kelvin entre la température d'air amené (t_{L1}) et la température de l'évaporateur (t_{O}); et dans lequel on multiplie cette valeur différentielle (Δt₁) par un facteur entre 0,6 et 0,7, en particulier par le facteur 0,625, afin de former une valeur calculée pour la température, et la valve d'expansion (EV) du côté d'entrée du refroidisseur à air est pilotée de manière continue ou périodiquement de sorte que la surchauffe formée par la température (t_{Oh}) à la sortie de l'évaporateur et la température de l'évaporateur (t_{O}) est du moins essentiellement égale à la valeur calculée pour la température.

2. Procédé selon la revendication 1, caractérisé en ce que la température (t_{O}) de l'évaporateur est mesurée via une sonde de température fixée au tube de l'évaporateur, en particulier dans la région de mi-longueur du tube de l'évaporateur.

3. Procédé selon la revendication 1 ou 2, caractérisé en ce que les valeurs différentielles, calculées et comparatives sont formées en particulier en continu et en ce que la valve d'expansion (EV) est pilotée à une cadence temporelle prédéterminée.

4. Procédé selon l'une quelconque des revendications précédentes, caractérisé en ce que le pilotage de la valve d'expansion (EV) se fait chaque fois que la valeur comparative est hors d'une marge de tolérances prédéterminée.

5. Procédé selon l'une quelconque des revendications précédentes, caractérisé en ce qu'au cours de la phase de la mise en marche du refroidisseur à air, on utilise pour le pilotage de la valve d'expansion (EV) une cadence temporelle qui diffère de celle du fonctionnement normal.

6. Procédé selon l'une ou plusieurs des revendications précédentes, caractérisé en ce qu'on utilise comme valve d'expansion (EV) une valve d'expansion réglable électriquement ou électroniquement, en particulier pilotable par voie numérique, avec une aiguille de valve réglable.

7. Procédé selon l'une ou plusieurs des revendications précédentes, caractérisé en ce que le traitement des valeurs mesurées et la formation de signaux de pilotage pour la valve d'expansion (EV) se fait par une unité de calcul équipée de ou pouvant être chargée avec un programme spécialement élaboré.
